# EUROPÄISCHE PATENTSCHRIFT

(11) **EP 3 828 444 B1**
(45) Veröffentlichungstag und Bekanntmachung des Hinweises auf die Patenterteilung: **22.10.2025**
(21) Anmeldenummer: 20205252.8
(22) Anmeldetag: 02.11.2020
(51) Int. Cl.: F16H 55/08

(54) **GETRIEBE**
TRANSMISSION
BOÎTE DE VITESSES

(30) Priorität: 04.11.2019 DE 102019129667
(43) Veröffentlichungstag der Anmeldung: 02.06.2021
(73) Patentinhaber: WITTENSTEIN SE, 97999 Igersheim (DE)
(72) Erfinder: Schreiber, Heiko, 02692 Doberschau (DE); Kümmeth, Andreas, 97199 Ochsenfurt (DE); Röthlingshöfer, Tobias, 72766 Reutlingen (DE)
(74) Vertreter: Zimmermann & Partner Patentanwälte mbB

(56) Entgegenhaltungen:
- DE-A1- 102006 042 786
- DE-A1- 102012 104 083
- DE-A1- 102015 105 524

## Beschreibung

### Gebiet der Erfindung

Die Erfindung betrifft ein Getriebe und eine Verwendung eines Getriebes und einen Zahn für ein Getriebe.

### Stand der Technik

Aus dem Stand der Technik sind Getriebe bekannt, welche Zähne umfassen, die in einem Zahnträger radial verschieblich gelagert sind. Zum Antrieb der Zähne werden Antriebselemente mit einer Profilierung, wie beispielsweise Kurvenscheiben, verwendet. Die Zähne greifen in eine Verzahnung ein, so dass es zu einer Relativbewegung zwischen dem Zahnträger mit den Zähnen und der Verzahnung kommt. Die Relativbewegung zwischen Verzahnung und Zähnen ist dabei um mindestens eine Größenordnung geringer als die Bewegung des Antriebselementes mit der Profilierung. Auf diese Weise lassen sich hohe Übersetzungen erzielen, ein Beispiel eines solchen Getriebes ist in der DE 10 2007 011 175 A1 veröffentlicht. Die DE 10 2015 105 524 A1, welche die Merkmale des Oberbegriffs des Anspruchs 1 zeigt, und die DE 10 2006 042 786 A1 betreffen jeweils ein Getriebe. Die DE 10 2012 104 083 A1 betrifft ein Lager für ein Getriebe.

Ein kritischer Punkt dieser Getriebe ist die Lagerung der Zähne in dem Zahnträger. Bei der Kraftübertragung von einem Zahn auf den Zahnträger, welcher den Abtrieb darstellen kann, treten Kontaktkräfte zwischen dem Zahn und dem Zahnträger auf. Dabei kommt es zu Wärmeentwicklung und unter Umständen zu Materialabtrag durch die Bewegung der Zähne. Beides kann im Betrieb unerwünscht sein.

### Offenbarung der Erfindung

Aufgabe der Erfindung ist es, ein Getriebe oder einen Zahn anzugeben, welche gegenüber aus dem Stand der Technik bekannten Getrieben verbessert sind, wobei eine verringerte Wärmeentwicklung oder ein verringerter Verschleiß im Bereich der Zahnführung erreicht werden soll. Weiterhin ist es Aufgabe der Erfindung, eine Verwendung eines solchen Getriebes anzugeben.

Die Aufgabe wird mit einem Getriebe nach dem Anspruch 1, einem dazugehörigen Zahn nach Anspruch 11 und einer Verwendung nach dem nebengeordneten Anspruch gelöst. Vorteilhafte Weiterbildungen und Ausführungsformen ergeben sich aus den Unteransprüchen.

Ein Aspekt der Erfindung betrifft ein Getriebe nach dem unabhängigen Anspruch 1. Ein Getriebe, insbesondere Koaxialgetriebe, umfasst eine Verzahnung, einen Zahnträger mit Führungen, Zähne, welche in den Führungen zum Eingriff mit der Verzahnung aufgenommen sind, wobei die Zähne in den Führungen in Richtung ihrer Längsachse relativ zu dem Zahnträger verschieblich gelagert sind, eine Kurvenscheibe zum Antrieb der Zähne entlang der jeweiligen Längsachse der Zähne, wobei mindestens einer der Zähne jeweils einen Zahnflankenbereich mit Zahnflanken und einen Zahnrumpf aufweist, wobei zwischen dem Zahnrumpf und den Zahnflanken jeweils eine vom Zahnrumpf zur Zahnflanke nach innen zurückspringende Schulter vorgesehen ist. Das Getriebe ist dadurch gekennzeichnet, dass in einer Schnittebene, welche entlang der Längsachse des Zahns und senkrecht zu den Zahnflanken verläuft, eine Tangente an einer der Zahnflanken ein Volumen des Zahnrumpfes schneidet.

Ein weiterer Aspekt der Erfindung betrifft die Verwendung eines Getriebes in einer der hierin beschriebenen typischen Ausführungsformen.

Ein weiterer Aspekt der Erfindung betrifft einen Zahn nach dem nebengeordneten Anspruch 11 für ein Getriebe in einer der hierin beschriebenen typischen Ausführungsformen. Ein Zahn weist einen Zahnflankenbereich mit Zahnflanken und einen Zahnrumpf auf, wobei zwischen dem Zahnrumpf und den

Zahnflanken jeweils eine vom Zahnrumpf zur Zahnflanke nach innen zurückspringende Schulter vorgesehen ist. Der Zahn ist dadurch gekennzeichnet, dass in einer Schnittebene, welche entlang der Längsachse des Zahns und senkrecht zu den Zahnflanken verläuft, eine Tangente an einer der Zahnflanken ein Volumen des Zahnrumpfes schneidet.

Typischerweise ist die Schulter eines Zahns in einem Schulterbereich des Zahns angeordnet. Typischerweise ist der Schulterbereich zwischen dem Zahnflankenbereich des Zahns und dem Zahnrumpf des Zahns angeordnet. Typischerweise bilden der Schulterbereich und der Zahnflankenbereich zusammen einen Zahnkopf des Zahnes. Insbesondere umfasst hierin der Zahnflankenbereich jenen Bereich des Zahns entlang der Längsachse des Zahns, in welchem die Zahnflanken des Zahns und eine Zahnspitze des Zahns angeordnet sind.

Ausführungsformen der Erfindung betreffen insbesondere Koaxialgetriebe. Üblicherweise umfassen Getriebe der Erfindung eine innenliegende Kurvenscheibe mit einer Profilierung als Antriebselement und ein Hohlrad mit einer innenliegenden Verzahnung oder ein außenliegendes Antriebselement mit innerer Profilierung und ein innenliegendes Zahnrad oder eine innenliegende Zahnstange, welche für den Fall des außenliegenden Antriebselementes die Verzahnung stellt. Konfigurationen von Ausführungsformen betreffen Lineargetriebe zur Umsetzung einer Rotation in eine Linearbewegung. Die Verzahnung ist typischerweise eine umlaufende Verzahnung. In die Verzahnung greifen die Zähne oder die Zahnköpfe der Zähne ein, wobei die Zähne typischerweise radial oder axial verschieblich relativ zu dem Zahnträger gelagert sind.

Bei typischen Ausführungsformen sind die Führungen des Zahnträgers bezüglich der Drehachse der Kurvenscheibe radial ausgerichtet. Typischerweise sind die Zähne in den Führungen des Zahnträgers bezüglich der Drehachse der Kurvenscheibe radial verschieblich gelagert. Typischerweise sind die Zähne linear radial relativ zu dem Zahnträger gelagert. Dabei bedeutet "linear radial" üblicherweise, dass eine Führung in radialer Richtung vorliegt, welche lediglich eine Bewegung des Zahnes in radialer Richtung und insbesondere eine Verkippung des Zahns im Rahmen des Führungsspiels zulässt.

Bei weiteren typischen Ausführungsformen sind die Führungen des Zahnträgers bezüglich der Drehachse der Kurvenscheibe axial ausgerichtet sind. Typischerweise sind die Zähne in den Führungen des Zahnträgers bezüglich der Drehachse der Kurvenscheibe axial verschieblich gelagert. Typischerweise sind die Zähne linear axial relativ zu dem Zahnträger gelagert. Üblicherweise bedeutet "linear axial", dass eine Führung in axialer Richtung vorliegt, welche lediglich eine Bewegung des Zahnes in axialer Richtung zulässt.

Typischerweise sind die Zähne in dem Zahnträger jeweils in genau einer Richtung verschieblich gelagert, typischerweise in Richtung der Längsachse des Zahnes. Dies kann beispielsweise dadurch erreicht werden, dass der Zahn über eine bestimmte Länge, insbesondere über eine bestimmte Länge entlang der Längsachse des Zahnes, einen gleichbleibenden Querschnitt in Verschieberichtung aufweist, wobei die Führung für den Zahn in dem Zahnträger als Schlitz oder Öffnung mit gleichbleibendem Querschnitt ausgeführt ist.

Bei typischen Ausführungsformen der erfindungsgemäßen Getriebe ist zumindest ein Teil der Zähne biegesteif ausgeführt. Der Begriff "biegesteif" ist dabei typischerweise technisch zu verstehen, das heißt, dass Biegungen der Zähne aufgrund der Steifigkeit des Materials der Zähne derart klein sind, dass sie für die Kinematik des Getriebes zumindest im Wesentlichen unbedeutend sind. Biegesteife Zähne umfassen insbesondere Zähne, welche aus einer Metalllegierung, insbesondere Stahl oder einer Titanlegierung, einer Nickellegierung oder anderen Legierungen hergestellt sind. Weiterhin können auch biegesteife Zähne aus Kunststoff vorgesehen werden, insbesondere bei Getrieben, bei welchen auch zumindest einer der folgenden Teile ebenfalls aus Kunststoff hergestellt ist: Verzahnung an einem Hohlrad oder einem Zahnrad, Zahnträger und Antriebselement. Bei typischen Ausführungsformen der Erfindung sind der Zahnträger und die Zähne aus einer Metalllegierung oder zusätzlich noch die Verzahnung oder weiter zusätzlich das Antriebselement aus einer Metalllegierung hergestellt. Solche Getriebe bieten den Vorteil, dass sie äußerst verdrehsteif und hoch belastbar sind. Getriebe aus Kunststoff bieten den Vorteil, dass sie ein geringes Gewicht aufweisen. Mit dem Ausdruck "biegesteif" ist insbesondere eine Biegesteifigkeit um eine Querachse des Zahns gemeint. Dies bedeutet insbesondere, dass bei einer Ansicht des Zahns als Balken von einer Zahnbasis zu einem Zahnflankenbereich eine Biegesteifigkeit vorliegt, welche Biegeverformungen zwischen Zahnflankenbereich und Zahnbasis zumindest im Wesentlichen ausschließt.

Durch die Biegesteifigkeit wird eine extrem hohe Belastbarkeit und Verdrehsteifigkeit des Getriebes erreicht.

Bei typischen Ausführungsformen ist zwischen dem Zahn und der Profilierung ein Schwenksegment angeordnet, welches auf einer Wälzlagerung gelagert ist, welche wiederum auf der Profilierung aufliegt. Typischerweise ist der Zahn mit dem Schwenksegment lose verbunden. Dabei bedeutet "lose Verbindung" vorzugsweise, dass das Zahnsegment lediglich auf das Schwenksegment aufgestellt, üblicherweise direkt aufgestellt ist. Bevorzugte Schwenksegmente umfassen ein Profil, welches ein Abrutschen des Zahnes von dem Schwenksegment oder ein Verrutschen des Schwenksegments zumindest in einer Richtung verhindert. Ein solches Profil kann beispielsweise ein Wulst sein, welcher in eine Ausnehmung an der Zahnbasis des Zahns eingreift. Für eine mögliche Ausführungsform eines Schwenksegments wird auf die DE 10 2015 105 523 A1 verwiesen.

Typische Zahnträger umfassen Führungen mit jeweils einer Zahnbasisöffnung und einer Zahnkopföffnung. Typischerweise ist die Zahnbasisöffnung Richtung Kurvenscheibe ausgerichtet und die Zahnkopföffnung in Richtung der Verzahnung. Dies ermöglicht die Aufnahme der Zähne, so dass die Zähne entlang ihrer jeweiligen Längsachse in der Führung verschieblich gelagert sind. Die Längsachse eines Zahnes verläuft typischerweise von einer Zahnbasis des Zahnes zu dem Zahnflankenbereich des Zahnes. Die Zähne sind mit ihrer jeweiligen Zahnbasis jeweils auf Schwenksegmenten gelagert, welche wiederum über Wälzkörper auf der Kurvenscheibe gelagert sind. Der Zahnträger ist bei typischen Ausführungsformen kreisförmig oder ringförmig. Typische Führungen für die Zähne in dem Zahnträger sind als Durchgangsöffnungen oder Durchgangsbohrungen ausgebildet. Weitere typische Zahnträger umfassen rechteckige Einfräsungen oder Langlöcher oder Schlitze als Führungen. Die Zähne sind in dem Zahnträger typischerweise aufgenommen, so dass der Zahnkopf aus der Zahnkopföffnung hervorsteht oder aus der Zahnkopföffnung herausschiebbar ist und die Zahnbasis aus der Zahnbasisöffnung hervorsteht. Durch den Antrieb der Kurvenscheibe mit der Profilierung ist über die Wälzkörper und die Schwenksegmente eine Kraft in Richtung der jeweiligen Längsachse der Zähne auf die Zähne ausübbar, so dass diese aus den Führungen an der Zahnkopfseite herausgedrückt werden.

Die Verzahnung und die Zähne weisen typischerweise gekrümmte Flanken auf. Beispiele für Krümmungen der Flanken sind eine zylinderförmige Krümmung, eine Krümmung der Flanken entlang einer Helix oder einer Wendelfläche um die Drehachse des Koaxialgetriebes, oder eine Krümmung in Form einer logarithmischen Spirale. Für eine mögliche Ausführungsform einer Krümmung in Form einer logarithmischen Spirale wird auf die DE 10 2007 011 175 A1 verwiesen. Die gekrümmte Oberfläche bietet den Vorteil, dass die in Eingriff stehenden Flanken flächig und nicht lediglich linien- oder punktförmig anliegen. Auf diese Weise wird eine extreme Steifigkeit bei der Kraftübertragung zwischen der Verzahnung und den Zähnen erreicht. Unter "Flanken" sind hierin insbesondere Zahnflanken der Zähne oder Flanken der Verzahnung zu verstehen.

Bei typischen Ausführungsformen weist ein Zahnkopf eines Zahns entlang der Längsachse des Zahns einen Zahnflankenbereich mit Zahnflanken auf. Typischerweise umfasst der Zahn in einem Zahnkopf gegenüberliegenden Endbereich des Zahns eine Zahnbasis. Die Zahnbasis weist typischerweise eine Ausnehmung zur Lagerung des Zahns auf einem Profil eines Schwenksegments auf.

Bei typischen Ausführungsformen umfasst der Zahn zwischen dem Zahnflankenbereich und der Zahnbasis einen Schulterbereich und einen Zahnrumpf. Der Zahnrumpf erstreckt sich entlang der Längsachse des Zahns über eine Rumpflänge. Typischerweise weist der Zahnrumpf über die Rumpflänge abgesehen von Schmierkanälen oder Ähnlichem zumindest im Wesentlichen einen gleichbleibenden Querschnitt auf. Typischerweise ist der Zahnrumpf zumindest im Wesentlichen zylinderförmig ausgeführt.

Beispielsweise können Kräfte zwischen einem Zahn und einem Zahnträger über einen Zahnführungskontakt übertragen werden, insbesondere über einen Zahnführungskontakt zwischen dem Zahnrumpf und der Führung des Zahns. Insbesondere kann die Rumpflänge eines typischen Zahns mit einer Schulter gegenüber einer Rumpflänge eines aus dem Stand der Technik bekannten Zahnes ohne Schulter verlängert sein. Beispielsweise kann der Zahnflankenbereich entlang der Längsachse des Zahns gegenüber einem aus dem Stand der Technik bekannten Zahn verkürzt sein, insbesondere ohne eine Gesamtlänge des Zahns gegenüber dem aus dem Stand der Technik bekannten Zahn zu ändern. Durch die Verlängerung der Rumpflänge kann beispielsweise der äußere Zahnführungskontakt weiter in Richtung der Verzahnung verlagert werden. Dadurch kann sich eine verbesserte Hebelwirkung mit geringeren Kontaktkräften am Zahnführungskontakt oder bei der Abstützung von Kräften zwischen dem Zahn und dem Zahnträger ergeben.

Bei typischen Ausführungsformen ist der Zahn als Flachzahn oder als Rundzahn ausgeführt. Flachzähne werden typischerweise in Führungen mit nicht-kreisförmigem Querschnitt in dem Zahnträger geführt. Bei typischen Ausführungsformen weist der Zahn eine mindestens doppelt so große Breite, beispielsweise in Axialrichtung des Getriebes, wie Dicke, beispielsweise in Umlaufrichtung des Getriebes, auf. Weitere Ausführungsformen umfassen kreisrunde oder ovale Zähne oder kreisrunde Zähne mit Abflachungen.

Bei typischen Ausführungsformen umfasst ein Zahn zwischen den Zahnflanken des Zahnflankenbereichs und dem Zahnrumpf eine von dem Zahnrumpf zur Zahnflanke nach innen, insbesondere nach innen zu der Längsachse des Zahns hin, zurückspringende Schulter. Insbesondere ist die Schulter in einem Schulterbereich zwischen den Zahnflanken und dem Zahnrumpf vorgesehen. Die Schulter ist beispielsweise nach innen, insbesondere nach innen zur Längsachse des Zahns hin, ausgerundet oder mit einem Radius ausgebildet. Bei weiteren typischen Ausführungsformen ist die Schulter als Absatz oder als Stufe ausgeführt. Insbesondere kann die Schulter kantig nach innen in Richtung der Längsachse ausgeführt sein.

Typischerweise ist in dem Schulterbereich des Zahns eine Zahnaußenfläche des Zahns zumindest teilweise durch die Schulter gebildet. Insbesondere ist die Form der Zahnaußenfläche zwischen zwei Zahnflanken und dem Zahnrumpf des Zahns durch eine jeweilige Schulter vorgegeben. Die Zahnaußenfläche des Zahns kann in dem Schulterbereich oder in dem Zahnflankenbereich Flächen umfassen, welche eine andere Form als eine Schulter oder eine Zahnflanke aufweisen, beispielsweise Teilflächen eines konischen Grundkörpers oder eines zylindrischen Grundkörpers. Bei Ausführungsformen verläuft die Außenkontur des Zahnkopfes in einem Bereich, in welchem keine Zahnflanken oder Schulter ausgebildet sind, entlang eines konischen oder zylindrischen Grundkörpers.

Bei typischen Ausführungsformen schließen die Zahnflanken mit der Längsachse jeweils einen Flankenwinkel ein. Der Flankenwinkel beträgt typischerweise mindestens 15°, insbesondere mindestens 20° oder mindestens 25°, oder maximal 45°, insbesondere maximal 40° oder maximal 35°. Unter einer Zahnflanke ist in diesem Zusammenhang insbesondere eine Fläche des Zahnflankenbereiches zu verstehen, welche mit der Verzahnung in Kontakt kommen kann oder eine Last, beispielsweise eine Flächenlast, aus dem Kontakt des Zahns mit der Verzahnung tragen kann. Unter dem Flankenwinkel ist insbesondere ein Winkel zu verstehen, welchen eine Flankenlinie der Zahnflanke in einer Schnittebene des Zahns mit der Längsachse des Zahns einschließt, wobei die Schnittebene des Zahns entlang der Längsachse und senkrecht zu der Zahnflanke verläuft. Beispielsweise kann die Flankenlinie in der Schnittebene einer mittleren Tangente an die Zahnflanke entsprechen oder einer Tangente an die Zahnflanke in der Mitte der Zahnflanke oder einer Sekante durch die Endpunkte der Zahnflanke in der Schnittebene.

Typischerweise ist eine Schulter konkav ausgerundet. Typischerweise weist die Schulter eine Rücknahme gegenüber der Zahnflanke auf. Bei typischen Ausführungsformen ist die Schulter, insbesondere die Rücknahme der Schulter, am Übergang zu einer Zahnflanke konkav ausgerundet. Insbesondere ist die Rücknahme der Schulter bezüglich einer Flankenlinie der Zahnflanken nach innen ausgerundet. Insbesondere kommt der Zahn an der Rücknahme der Schulter bei einem Verzahnungseingriff nicht mit der Verzahnung in Kontakt. Insbesondere trägt der Zahn an der Rücknahme der Schulter keine Last der Verzahnung. Ein Vorteil der Rücknahme der Schulter gegenüber der Zahnflanke kann sein, dass Planschverluste im Kontakt des Zahns mit der Verzahnung reduziert werden können. Insbesondere kann die Zahnflanke durch die Rücknahme verkleinert sein, wodurch Schmieröl von einer kleineren Fläche verdrängt werden muss.

Typischerweise ist in einer Schnittebene des Zahns entlang der Längsachse und senkrecht zu der Zahnflanke die Schulter an einer ersten Stelle, insbesondere an einer ersten Stelle am Übergang zum Zahnrumpf, stärker zu der Längsachse des Zahns geneigt als die Zahnflanke. Beispielsweise ist die Neigung der Schulter zur Längsachse an der ersten Stelle größer als der Flankenwinkel der Zahnflanke, insbesondere um mindestens 5° oder mindestens 10° größer.

Bei typischen Ausführungsformen ist in einer Schnittebene des Zahns entlang der Längsachse und senkrecht zu der Zahnflanke die Schulter an einer zweiten Stelle, insbesondere an einer zweiten Stelle am Übergang zu der Zahnflanke, schwächer zu der Längsachse des Zahns geneigt als die Zahnflanke. Beispielsweise ist die Neigung der Schulter zur Längsachse an der zweiten Stelle kleiner als der Flankenwinkel, insbesondere um mindestens 3° oder mindestens 5° kleiner. Insbesondere kann die Schulter eine erste Stelle und eine zweite Stelle aufweisen.

Bei typischen Ausführungsformen schneidet in einer Schnittebene, welche entlang der Längsachse des Zahns und senkrecht zu den Zahnflanken verläuft, eine Tangente an einer der Zahnflanken ein Volumen des Zahnrumpfes. Insbesondere schneidet die Tangente das Volumen des Zahnrumpfes und ein Volumen des Schulterbereichs des Zahns. Typischerweise wird das Volumen des Zahnrumpfes durch eine Flankenfläche in mindestens zwei Teilvolumina geschnitten, wobei sich die Flankenfläche entlang der Flankenlinie und senkrecht zu der Schnittebene erstreckt.

Bei typischen Ausführungsformen weist ein Zahnkopf des Zahns, insbesondere der Zahnflankenbereich und die Schulter gemeinsam, eine axiale Länge auf, welche größer ist als eine Tiefe einer Zahnlücke der Verzahnung. Unter der "axialen Länge" des Zahnkopfs ist insbesondere die gemeinsame Länge des Zahnflankenbereiches und der Schulter bezüglich der Längsachse des Zahns zu verstehen. Bei einem Getriebe mit radial ausgerichteten Führungen ist unter der Tiefe der Zahnlücke insbesondere die Differenz aus einem radialem Maximum und einem radialem Minimum der Verzahnung zu verstehen. Bei einem Getriebe mit axial ausgerichteten Führungen ist unter der Tiefe der Zahnlücke insbesondere die Differenz aus einem axialen Maximum und einem axialen Minimum der Verzahnung zu verstehen. Bei beispielhaften Ausführungsformen kann die axiale Länge von Zahnflankenbereich und Schulter kleiner sein als die 1,2-fache Tiefe der Zahnlücke, insbesondere kleiner als die 1,1-fache oder die 1,05-fache Tiefe der Zahnlücke. Bei weiteren beispielhaften Ausführungsformen kann bei einem vollständigen Eingriff des Zahnflankenbereiches in die Verzahnung eine äußere Kante der Schulter an der Grenze zwischen Zahnrumpf und Schulter einen Abstand in axialer Richtung des Zahnes zu einem Verzahnungskopf der Verzahnung von maximal der 0,1-fachen, beispielsweise der 0,05-fachen, Tiefe einer Zahnlücke der Verzahnung aufweisen.

Bei typischen Ausführungsformen weist der Zahnrumpf in einem, insbesondere an die Schulter angrenzenden, Einlaufbereich einen Konus auf, wobei eine Tangente an den Außenumfang des Konus einen Konuswinkel von maximal 2°, insbesondere von maximal 1° oder von maximal 0,5°, mit der Längsachse des Zahns einschließt. Typische Konuswinkel des Konus des Zahnes liegen bei mindestens 0,05° oder mindestens 0,1° oder mindestens 0,2°. Der Konus kann sich teilweise vom Zahnrumpf aus in den Schulterbereich oder in den Zahnflankenbereich, insbesondere bis zu einer Zahnspitze des Zahns erstrecken, beispielsweise an Zahnaußenflächen, die nicht als Schulter oder als Zahnflanken ausgebildet sind. Von dem Ausdruck "Konus" sind bei dem Einlaufbereich auch Fasen umfasst, insbesondere Fasen welche an Flachzähnen angebracht sind. Typische Einlaufbereiche können eben sein und eine Fase aufweisen. Typischerweise ist ein Übergang zwischen dem Konus des Zahnes und dem Zahnrumpf ballig ausgebildet. Dies ermöglicht ein schonendes Entlanggleiten des Zahnes in der Führung. Typischerweise ist der Zahn in der Führung des Zahnträgers derart aufgenommen, dass bei einem maximalen radialen oder axialen Hub eines Zahns in Richtung der Verzahnung der Konus des Zahns aus der Führung hervorsteht. Bei weiteren Ausführungsformen verbleibt der Konus zumindest teilweise innerhalb der Führung.

Typischerweise ist die Oberfläche des Zahns an der Schulter unterschiedlich bearbeitet als die Zahnflanken. Insbesondere ist die Oberfläche des Zahns an der Schulter weniger fein bearbeitet als die Zahnflanken. Beispielsweise kann die Schulter schon bei der Herstellung des Zahns weniger fein bearbeitet werden. Insbesondere müssen umso weniger Flächen fein bearbeitet werden, je größer die Schulter oder der Schulterbereich, in welchem die Schulter vorgesehen ist, ausgebildet ist.

Typische Ausführungsformen des Getriebes können gegenüber dem Stand der Technik den Vorteil bieten, dass das Getriebe eine verbesserte Hebelwirkung bei der Abstützung von Zahnkräften zwischen Zähnen und Zahnträger aufweist. Insbesondere kann das Getriebe eine höhere Tragfähigkeit oder weniger Verschleiß oder eine längere Lebensdauer aufweisen. Ein weiterer Vorteil typischer Getriebe kann sein, dass die Fertigung der Zähne oder des Getriebes vereinfacht ist. Beispielsweise kann die Schulter des Zahns weniger fein oder wesentlich ungenauer bearbeitet werden als die Zahnflanken des Zahns. Insbesondere kann ein Zahn schneller oder kostengünstiger gefertigt werden. Typische Getriebe können den weiteren Vorteil bieten, dass Planschverluste im Verzahnungskontakt reduziert werden können. Beispielsweise weisen typische Getriebe kleinere Zahnflanken auf, wodurch Schmieröl von einer kleineren Fläche verdrängt werden muss.

### Kurze Beschreibung der Zeichnungen

Nachfolgend wird die Erfindung anhand der beiliegenden Zeichnungen näher erläutert, wobei die Figuren zeigen:
- Fig. 1: zeigt einen Ausschnitt einer typischen Ausführungsform der Erfindung in einer schematischen Schnittansicht;
- Fig. 2: einen Zahn einer typischen Ausführungsform in einer schematischen Ansicht;
- Fig. 3: den Zahn der Fig. 2 in einer Seitenansicht;
- Fig. 4: einen Zahn einer weiteren typischen Ausführungsform in einer schematischen Ansicht; und
- Fig. 5: den Zahn der Fig. 4 in einer Seitenansicht;

### Beschreibung von Ausführungsbeispielen

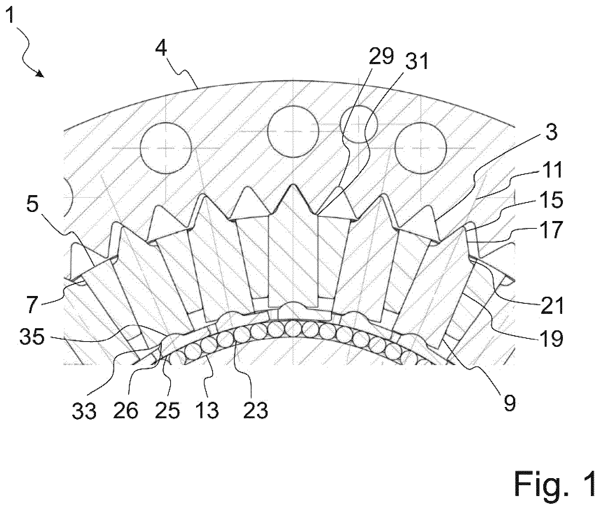

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsformen werden unter Umständen in verschiedenen Figuren und für verschiedene Ausführungsformen gleiche Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. Zur Übersichtlichkeit sind teilweise nicht alle jeweiligen Merkmale mit einem Bezugszeichen versehen, beispielsweise die Zähne (Bezugszeichen 9 in der Fig. 1).

In der Fig. 1 ist ein Ausschnitt einer typischen Ausführungsform der Erfindung in einer schematischen Schnittansicht dargestellt. Die Fig. 1 zeigt ein Getriebe 1 mit Zähnen 9, welche verschieblich in Führungen 7 eines Zahnträgers 5 aufgenommen sind. Der Zahnträger 5 ist zwischen einer Verzahnung 3 eines Hohlrads 4 und einer Kurvenscheibe 13 angeordnet. In der Fig. 1 sind die Führungen 7 radial ausgerichtet und die Zähne 9 linear radial verschieblich in den Führungen 7 gelagert. Insbesondere sind die Zähne 9 entlang ihrer jeweiligen Längsachse 11 verschieblich. Die Zähne 9 können zum Eingriff mit einer Verzahnung 3 des Hohlrads 4 radial verschoben werden.

Die Kurvenscheibe 13 dient in dem Getriebe 1 der Fig. 1 als Antriebselement des Getriebes 1. Die Kurvenscheibe 13 weist eine Profilierung in Umfangsrichtung der Kurvenscheibe 13 auf. Die Profilierung weist einen Verlauf mit zwei Erhebungen über den Umfang auf, so dass jeweils gegenüberliegende Zähne 9 am weitesten und gleich tief in Zahnlücken 29 der Verzahnung 3 eingreifen. Bei weiteren Ausführungsformen weist die Kurvenscheibe drei Erhebungen auf und bei noch weiteren Ausführungsformen weist die Kurvenscheibe nur eine oder bei weiteren Ausführungsformen mehr als drei Erhebungen auf.

In der beispielhaften Ausführungsform der Fig. 1 verläuft die Drehachse der Kurvenscheibe 13 senkrecht zu der Abbildungsebene der Fig. 1. Die Kurvenscheibe 13 ist bezüglich der Drehachse der Kurvenscheibe 13 radial innerhalb der Zähne 9 angeordnet und die Verzahnung 3 des Hohlrads 4 bezüglich der Drehachse der Kurvenscheibe 13 radial außerhalb der Zähne 9 angeordnet. Bei einer solchen Konfiguration wird der Abtrieb an dem Hohlrad 4 mit der Verzahnung 3 oder an dem Zahnträger 5 abgegriffen, wobei das jeweils andere Element festgelegt wird. Bei weiteren Ausführungsformen ist das Antriebselement außen, d.h. außerhalb des Zahnträgers, angeordnet und die Verzahnung innen angeordnet. Wiederum ist es möglich, den Abtrieb an der inneren Verzahnung oder an dem Zahnträger abzugreifen. Der Zahnträger kann auch mit seinen Öffnungen als Zahnkäfig bezeichnet werden, in welchem Zähne radial linear geführt verschieblich aufgenommen sind.

Das Getriebe 1 umfasst eine segmentierte Lagerung für die Zähne 9. Die segmentierte Lagerung umfasst Schwenksegmente 25, welche jeweils auf der dem Zahn 9 zugewandten Seite eine runde Zahnlagerfläche 26 aufweisen, welche einen Wulst bildet, auf dem eine Zahnbasis 33 eines Zahnes 9 oder bei typischen Ausführungsformen zwei, drei oder vier Zähne in axialer Richtung des Getriebes 1 nebeneinander angeordnet sein können. Der Wulst verhindert zusammen mit einer entsprechenden Ausnehmung 35 in der Zahnbasis 33 des jeweiligen Zahnes 9 ein Verrutschen des Zahnes 9 auf dem Schwenksegment 25.

Mit den Wulsten werden jeweils Zahnbasisgelenke für die Zähne 9 ausgebildet, so dass sich die Schwenksegmente 25 relativ zu den Zähnen 9 verkippen können, um eine zwangsfreie Führung zu gewährleisten. Die Schwenksegmente 25 sind relativ zueinander in Radialrichtung beweglich, so dass sich die Abstände zwischen den Schwenksegmenten 25 verändern lassen. Dies ermöglicht eine weitgehend zwangsfreie Führung und einen weitgehend zwangsfreien radialen Antrieb der Schwenksegmente 25 durch die Profilierung der Kurvenscheibe 13. Für eine Minimierung des Reibungswiderstandes zwischen der Profilierung und den Schwenksegmenten 25 sind die Wälzkörper 23 als Nadelrollen vorgesehen. Bei weiteren Ausführungsformen sind Kugeln oder andere Wälzlager zur Lagerung von Schwenksegmenten vorgesehen.

In der Fig. 1 umfasst ein Zahn 9 einen Zahnflankenbereich 15 mit Zahnflanken 17 und einer Zahnspitze des Zahns 9, wobei der Zahnflankenbereich 15 in einem der Verzahnung 3 des Hohlrads 4 zugewandten Zahnkopf des Zahns 9 angeordnet ist. Der Zahn 9 umfasst eine Zahnbasis 33 in einem der Kurvenscheibe 13 zugewandten Endbereich des Zahns 9, einen an die Zahnbasis 33 angrenzenden Zahnrumpf 19, und eine zwischen dem Zahnrumpf 19 und dem Zahnflankenbereich 15 angeordnete Schulter 21, insbesondere einen Schulterbereich des Zahns 9 mit der in dem Schulterbereich angeordneten Schulter 21. Die Schulter 21, insbesondere der Schulterbereich, und der Zahnflankenbereich 15 bilden zusammen den Zahnkopf des Zahnes 9.

Der Zahnrumpf 19 weist über eine Rumpflänge entlang der Längsachse 11 des Zahns 9 zumindest im Wesentlichen einen gleichbleibenden Querschnitt auf. Der Zahnrumpf 19 steht mit einer Führung 7 des Zahnträgers 5 in Kontakt. Über die Kontaktflächen, Kontaktlinien oder Kontaktpunkte können Kräfte, beispielsweise durch Hebelwirkung, zwischen dem Zahn 9 und dem Zahnträger 5 übertragen werden.

Der Zahnflankenbereich 15 umfasst Zahnflanken 17, welche mit der Verzahnung 3 in Kontakt kommen können. Über die Zahnflanken 17 können Kräfte zwischen der Verzahnung 3 und dem Zahn 9 übertragen werden.

Zwischen dem Zahnrumpf 19 und den Zahnflanken 17 des Zahnflankenbereiches 15 springt jeweils eine Schulter 21 von dem Zahnrumpf 19 nach innen zu den Zahnflanken 17 hin zurück. Die Schulter 21 und der Zahnflankenbereich 15 weisen gemeinsam eine axiale Länge auf, welche größer ist als eine Tiefe einer Zahnlücke 29 der Verzahnung 3. Die Schulter 21 kann insbesondere zur Verlängerung der Rumpflänge des Zahnrumpfes 19 bis zu einer Kante 31 an der Grenze zwischen dem Zahnrumpf 19 und der Schulter 21 dienen. Insbesondere können Hebelwirkungen bei der Übertragung von Kräften zwischen einem Zahn 9 und dem Zahnträger 5 verbessert werden, beispielsweise durch einen weit in Richtung der Verzahnung 3 verschobenen Zahnführungskontakt zwischen dem Zahnrumpf 19 und der Führung 7.

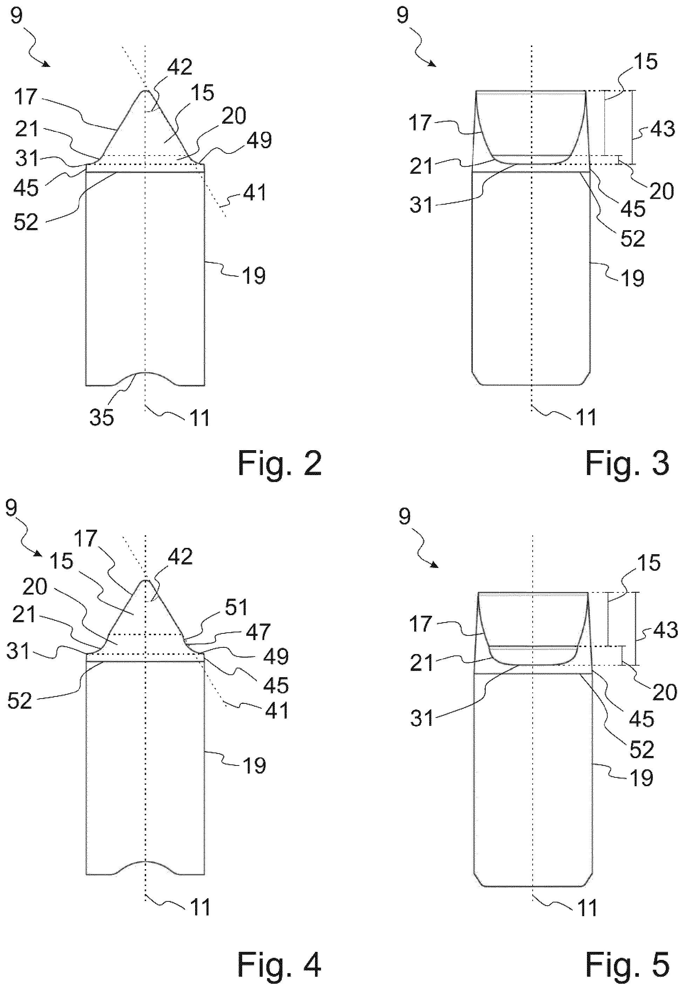

Fig. 2 zeigt schematisch eine Ansicht eines Zahns 9 einer typischen Ausführungsform, wobei die Ansichtsebene senkrecht zu Zahnflanken 17 eines Zahnflankenbereichs 15 des Zahns 9 verläuft. Der Zahnflankenbereich 15 ist der axiale Bereich entlang der Längsachse 11 des Zahns 9, in welchem die Zahnflanken 17 und eine Zahnspitze des Zahns 9 angeordnet sind. Zwischen dem Zahnflankenbereich 15 und einem Zahnrumpf 19 des Zahns 9 umfasst der Zahn 9 jeweils eine von dem Zahnrumpf 19 zu den Zahnflanken 15 zurückspringende Schulter 21. Die Schulter 21 ist in einem Schulterbereich 20 des Zahns 9 angeordnet. Der Zahnrumpf 19 umfasst in einem Einlaufbereich einen Konus 45, welcher sich in einer axialen Richtung bezüglich der Längsachse 11 des Zahns 9 vom Zahnrumpf, insbesondere ab einer Kante 52 aus, in Richtung der Zahnspitze erstreckt und an die Schulter 21 angrenzt. Der Konus 45 weist einen Winkel von 2° gegenüber der Längsachse 11 des Zahns 9 auf. Der Übergang zwischen dem Konus 45 des Zahns 9 und dem zylinderförmigen Teil des Zahnrumpfes 19 ist ballig ausgebildet. Wie in Fig. 3 gezeigt, erstrecken sich konische Flächen des Konus 45 teilweise in den Schulterbereich 20 und in den Zahnflankenbereich 15 des Zahns 9, insbesondere in Teile des Zahns 9, in denen keine Schulter 21 oder keine Zahnflanke 17 vorgesehen ist.

In der Fig. 2 ist zu einer Zahnflanke 17 eine Flankenlinie 41 eingezeichnet, welche in der Fig. 2 beispielsweise einer mittleren Tangente an die Zahnflanke 17 in einer Schnittebene des Zahns 9 entspricht. Die Flankenlinie 41 schneidet ein Volumen des Zahnrumpfes 19. Die Flankenlinie 41 schließt mit der Längsachse 11 einen Flankenwinkel 42 ein. Die Schulter 21 ist an einer ersten Stelle 49, beispielsweise an oder nahe der Kante 31, stärker zu der Längsachse 11 geneigt als die Zahnflanke 17. Insbesondere ist die Neigung der Schulter 21 zu der Längsachse an der ersten Stelle 49 größer als der Flankenwinkel 42. In der Fig. 2 ist die Schulter 21 mit einem Radius ausgerundet. Die Schulter 21 ist weniger fein bearbeitet als die Zahnflanke 17.

Fig. 3 zeigt schematisch eine Seitenansicht des Zahns 9, wobei die Ansichtsebene der Seitenansicht senkrecht zu der Ansichtsebene der Fig. 2 steht. Die Fig. 3 zeigt die Schulter 21 und den Zahnflankenbereich 15 mit Zahnflanken 17, wobei ein Zahnkopf 43 des Zahns, welcher die Schulter 21 und den Zahnflankenbereich 15 umfasst, eine axiale Länge aufweist, welche größer ist als eine Tiefe einer Zahnlücke einer Verzahnung in einem typischen Getriebe. Insbesondere kann der Zahn 9 mit dem Zahnflankenbereich 15 vollständig in die Verzahnung eintauchen, ohne dass die Schulter 21 in Berührung mit der Verzahnung gelangt.

Fig. 4 zeigt schematisch eine Ansicht eines Zahns 9 einer weiteren typischen Ausführungsform, wobei die Ansichtsebene senkrecht zu Zahnflanken 17 eines Zahnflankenbereichs 15 des Zahns 9 verläuft. In der Fig. 4 ist eine Schulter 21 zur Zahnflanke 17 hin konkav ausgerundet, beispielsweise konkav nach innen zur Längsachse 11 hin. Die Schulter 21 weist gegenüber einer Zahnflanke 17 oder einer Flankenlinie 41 eine Rücknahme 47 nach innen hin auf. Insbesondere ist die Rücknahme der Schulter 21 an einer ersten Stelle 49 nahe dem Übergang zu einem Zahnrumpf 19 des Zahns 9 stärker zu der Längsachse 11 geneigt als die Zahnflanke 17, insbesondere mit einer Neigung, welche größer ist als der Flankenwinkel 42. Die Rücknahme 47 der Schulter 21 ist an einer zweiten Stelle 51 nahe dem Übergang zu einer Zahnflanke 17 des Zahnflankenbereiches 15 des Zahns 9 schwächer zu der Längsachse 11 geneigt als die Zahnflanke 17, insbesondere mit einer Neigung, welche kleiner ist als der Flankenwinkel 42.

Die Fig. 5 zeigt schematisch eine Seitenansicht des Zahns 9, wobei die Ansichtsebene der Seitenansicht senkrecht zu der Ansichtsebene der Fig. 4 steht. In den Figuren 4 und 5 ist die Schulter 21, insbesondere die Rücknahme 47, weniger fein bearbeitet als die Zahnflanke 17. Durch die Rücknahme 47 der Schulter 21 können die Zahnflanken 17 beispielsweise auf jene Flächen reduziert werden, welche zur Übertragung von Kräften zwischen einer Verzahnung eines Hohlrads und dem Zahnflankenbereich 15 des Zahns 9 benötigt werden. Durch die Rücknahme 47 und die Verkleinerung der Flankenflächen können Planschverluste reduziert werden, welche aufgrund eines Verdrängens von Schmieröl zwischen einem Zahn und einer Verzahnung auftreten können.

Die Erfindung ist nicht auf zuvor beschriebene Ausführungsform beschränkt, vielmehr wird der Umfang der Erfindung durch die beigefügten Ansprüche bestimmt.

## Patentansprüche

1. Getriebe (1), insbesondere Koaxialgetriebe, mit
- einer Verzahnung (3),
- einem Zahnträger (5) mit Führungen (7),
- Zähnen (9), welche in den Führungen (7) zum Eingriff mit der Verzahnung (3) aufgenommen sind, wobei die Zähne (9) in den Führungen (7) in Richtung ihrer Längsachse (11) relativ zu dem Zahnträger (5) verschieblich gelagert sind, und
- einer Kurvenscheibe (13) zum Antrieb der Zähne (9) entlang der jeweiligen Längsachse (11) der Zähne (9),
- wobei mindestens einer der Zähne (9) jeweils einen
Zahnflankenbereich (15) mit Zahnflanken (17) und einen Zahnrumpf (19) aufweist,
- wobei zwischen dem Zahnrumpf (19) und den Zahnflanken (17) jeweils eine vom Zahnrumpf (19) zur Zahnflanke (17) nach innen zurückspringende Schulter (21) vorgesehen ist,
**dadurch gekennzeichnet,**
- **dass** in einer Schnittebene, welche entlang der Längsachse (11) des Zahns (9) und senkrecht zu den Zahnflanken (17) verläuft, eine Tangente an einer der Zahnflanken (17) ein Volumen des Zahnrumpfes (19) schneidet.

2. Getriebe (1) nach Anspruch 1, wobei der Zahnrumpf (19) zylinderförmig ist.

3. Getriebe (1) nach einem der vorhergehenden Ansprüche, wobei die Zahnflanken (17) mit der Längsachse (11) einen Flankenwinkel (42) einschließen und wobei der Flankenwinkel (42) mindestens 15° und/oder maximal 45° beträgt.

4. Getriebe (1) nach einem der vorhergehenden Ansprüche, wobei die Schulter (21) am Übergang zu den Zahnflanken (17) jeweils nach innen ausgerundet, insbesondere konkav ausgeformt, ist.

5. Getriebe (1) nach einem der vorhergehenden Ansprüche, wobei der Zahnflankenbereich (15) und die Schulter (21) gemeinsam eine axiale Länge aufweisen, welche größer ist als eine Tiefe einer Zahnlücke (29) der Verzahnung (3).

6. Getriebe (1) nach einem der vorhergehenden Ansprüche, wobei der Zahnrumpf (19) in einem, insbesondere in einem an die Schulter (21) angrenzenden, Einlaufbereich einen Konus (45) aufweist, und wobei eine Tangente an den Außenumfang des Konus (45) einen Konuswinkel von maximal 2° mit der Längsachse (11) des Zahns (9) einschließt.

7. Getriebe (1) nach einem der vorhergehenden Ansprüche, wobei die Oberfläche des Zahns (9) an der Schulter (21) unterschiedlich bearbeitet ist als die Zahnflanken (17).

8. Getriebe (1) nach einem der vorhergehenden Ansprüche, wobei die Führungen (7) des Zahnträgers (5) bezüglich der Drehachse der Kurvenscheibe (13) radial ausgerichtet sind; und wobei die Zähne (9) in den Führungen (7) des Zahnträgers (5) bezüglich der Drehachse der Kurvenscheibe (13) radial verschieblich gelagert sind.

9. Getriebe (1) nach einem der Ansprüche 1 bis 7, wobei die Führungen (7) des Zahnträgers (5) bezüglich der Drehachse der Kurvenscheibe (13) axial ausgerichtet sind; und wobei die Zähne (9) in den Führungen (7) des Zahnträgers (5) bezüglich der Drehachse der Kurvenscheibe (13) axial verschieblich gelagert sind.

10. Verwendung eines Getriebes (1) nach einem der vorhergehenden Ansprüche.

11. Zahn (9) für ein Getriebe (1) nach einem der Ansprüche 1 bis 9, wobei der Zahn (9) einen Zahnflankenbereich (15) mit Zahnflanken (17) und einen Zahnrumpf (19) aufweist, wobei zwischen dem Zahnrumpf (19) und den Zahnflanken (17) jeweils eine vom Zahnrumpf (19) zur Zahnflanke (17) nach innen zurückspringende Schulter (21) vorgesehen ist,
**dadurch gekennzeichnet,**
**dass** in einer Schnittebene, welche entlang der Längsachse (11) des Zahns (9) und senkrecht zu den Zahnflanken (17) verläuft, eine Tangente an einer der Zahnflanken (17) ein Volumen des Zahnrumpfes (19) schneidet.

## Claims

1. Gear mechanism (1), in particular a coaxial gear mechanism, comprising
- gear toothing (3),
- a tooth carrier (5) having guides (7),
- teeth (9) which are accommodated in the guides (7) for engagement with the gear toothing (3), the teeth (9) being mounted in the guides (7) so as to be displaceable in the direction of their longitudinal axis (11) relative to the tooth carrier (5), and
- a cam disc (13) for driving the teeth (9) along each longitudinal axis (11) of the teeth (9),
- at least one of the teeth (9) comprising a tooth flank region (15) that has tooth flanks (17) and a tooth body (19),
- a shoulder (21) being provided between each tooth body (19) and the tooth flanks (17) which is inwardly set back from the tooth body (19) with respect to the tooth flank (17),
**characterised in that,**
- in a cutting plane which runs along the longitudinal axis (11) of the tooth (9) and perpendicularly to the tooth flanks (17), a tangent to one of the tooth flanks (17) intersects a volume of the tooth body (19).

2. Gear mechanism (1) according to claim 1, wherein the tooth body (19) is cylindrical.

3. Gear mechanism (1) according to either of the preceding claims, wherein the tooth flanks (17) include a flank angle (42) with the longitudinal axis (11), and wherein the flank angle (42) is at least 15° and/or a maximum of 45°.

4. Gear mechanism (1) according to any of the preceding claims, wherein, at the transition to the tooth flanks (17), the shoulder (21) is rounded inwards, in particular is concave.

5. Gear mechanism (1) according to any of the preceding claims, wherein the tooth flank region (15) and the shoulder (21) have a combined axial length which is greater than a depth of a tooth gap (29) of the gear toothing (3).

6. Gear mechanism (1) according to any of the preceding claims, wherein the tooth body (19) has a bevel (45) in an entry region, in particular in an entry region adjacent to the shoulder (21), and wherein a tangent to the outer circumference of the bevel (45) includes a bevel angle of a maximum of 2° with the longitudinal axis (11) of the tooth (9).

7. Gear mechanism (1) according to any of the preceding claims, wherein the surface of the tooth (9) on the shoulder (21) is machined differently from the tooth flanks (17).

8. Gear mechanism (1) according to any of the preceding claims, wherein the guides (7) of the tooth carrier (5) are radially aligned with respect to the axis of rotation of the cam disc (13); and wherein the teeth (9) are mounted in the guides (7) of the tooth carrier (5) so as to be radially displaceable with respect to the axis of rotation of the cam disc (13).

9. Gear mechanism (1) according to any of claims 1 to 7, wherein the guides (7) of the tooth carrier (5) are axially aligned with respect to the axis of rotation of the cam disc (13); and wherein the teeth (9) are mounted in the guides (7) of the tooth carrier (5) so as to be axially displaceable with respect to the axis of rotation of the cam disk (13).

10. Use of a gear mechanism (1) according to any of the preceding claims.

11. Tooth (9) for a gear mechanism (1) according to any of claims 1 to 9, the tooth (9) comprising a tooth flank region (15) that has tooth flanks (17) and a tooth body (19), a shoulder (21) being provided between the tooth body (19) and the tooth flanks (17) which is inwardly set back from the tooth body (19) with respect to the tooth flank (17),
**characterised in that,**
in a cutting plane which runs along the longitudinal axis (11) of the tooth (9) and perpendicularly to the tooth flanks (17), a tangent to one of the tooth flanks (17) intersects a volume of the tooth body (19).

## Revendications

1. Engrenage (1), en particulier engrenage coaxial, comprenant
- une denture (3),
- un support de dents (5) ayant des guides (7),
- des dents (9) logées dans les guides (7) pour s'engrener avec la denture (3), les dents (9) étant montées dans les guides (7) de manière à pouvoir se déplacer par rapport au support de dents (5) dans la direction de leur axe longitudinal (11), et
- une came (13) destinée à entraîner les dents (9) le long de l'axe longitudinal respectif (11) des dents (9),
- l'une au moins des dents (9) présentant une zone de flancs de dent respective (15), munie de flancs de dent (17), et un corps de dent (19),
- un épaulement (21) respectif en retrait vers l'intérieur depuis le corps de dent (19) vers le flanc de dent (17) étant prévu entre le corps de dent (19) et les flancs de dent (17),
**caractérisé en ce que**
- dans un plan de coupe qui s'étend le long de l'axe longitudinal (11) de la dent (9) et perpendiculairement aux flancs de dent (17), une tangente à l'un des flancs de dent (17) coupe un volume du corps de dent (19).

2. Engrenage (1) selon la revendication 1,
dans lequel le corps de dent (19) est de forme cylindrique.

3. Engrenage (1) selon l'une des revendications précédentes,
dans lequel les flancs de dent (17) forment un angle de flanc (42) avec l'axe longitudinal (11) et l'angle de flanc (42) est de 15° au minimum et/ou de 45° au maximum.

4. Engrenage (1) selon l'une des revendications précédentes,
dans lequel l'épaulement (21) est arrondi vers l'intérieur, en particulier de manière concave, au niveau de la transition vers les flancs de dents (17).

5. Engrenage (1) selon l'une des revendications précédentes,
dans lequel la zone de flancs de dent (15) et l'épaulement (21) présentent ensemble une longueur axiale qui est supérieure à une profondeur d'un entredent (29) de la denture (3).

6. Engrenage (1) selon l'une des revendications précédentes,
dans lequel le corps de dent (19) présente un cône (45) dans une zone d'entrée, en particulier dans une zone adjacente à l'épaulement (21), et une tangente à la périphérie extérieure du cône (45) forme un angle de cône de 2° au maximum avec l'axe longitudinal (11) de la dent (9).

7. Engrenage (1) selon l'une des revendications précédentes,
dans lequel la surface de la dent (9) au niveau de l'épaulement (21) est usinée différemment des flancs de dent (17).

8. Engrenage (1) selon l'une des revendications précédentes,
dans lequel les guides (7) du support de dents (5) sont orientés radialement par rapport à l'axe de rotation de la came (13) ; et les dents (9) sont montées dans les guides (7) du support de dents (5) de manière à pouvoir se déplacer radialement par rapport à l'axe de rotation de la came (13).

9. Engrenage (1) selon l'une des revendications 1 à 7,
dans lequel les guides (7) du support de dents (5) sont orientés axialement par rapport à l'axe de rotation de la came (13) ; et les dents (9) sont montées dans les guides (7) du support de dents (5) de manière à pouvoir se déplacer axialement par rapport à l'axe de rotation de la came (13).

10. Utilisation d'un engrenage (1) selon l'une des revendications précédentes.

11. Dent (9) pour un engrenage (1) selon l'une des revendications 1 à 9,
dans laquelle la dent (9) présente une zone de flancs de dent (15), munie de flancs de dent (17), et un corps de dent (19), un épaulement (21) respectif en retrait vers l'intérieur depuis le corps de dent (19) vers le flanc de dent (17) étant prévu entre le corps de dent (19) et les flancs de dent (17),
**caractérisée en ce que**
dans un plan de coupe qui s'étend le long de l'axe longitudinal (11) de la dent (9) et perpendiculairement aux flancs de dent (17), une tangente à l'un des flancs de dent (17) coupe un volume du corps de dent (19).
